# EUROPEAN PATENT APPLICATION

(11) **EP 4 559 311 A1**
(43) Date of publication of application: **28.05.2025**
(21) Application number: 24182498.6
(22) Date of filing: 17.06.2024
(51) Int. Cl.: A01M 1/14

(54) **SOCKET WITH INSECT-EXTERMINATION FUNCTION**

(30) Priority: 24.11.2023 CN 202323185641 U
(71) Applicant: Ningbo Dayang Technology Co., Ltd., Ningbo Zhejiang 315031 (CN)
(72) Inventor: Lyu, Lingling, Ningbo, 315031 (CN); Zheng, Jun, Ningbo, 315031 (CN); Ning, Yuanai, Ningbo, 315031 (CN)
(74) Representative: Zaboliene, Reda

(57) **Abstract**

A socket with insect-extermination function includes a socket body. The socket body is provided with a connection base, and a sticky trapping plate is detachably connected to the connection base. At least one side of the sticky trapping plate is pasted with a trapping sticker. This socket has an insect-extermination function, extending the functions of the socket. Due to the ubiquity of the socket, it can effectively exterminate indoor flying insects, keeping people safe from insects.

## Description

### TECHNICAL FIELD

The present disclosure relates to the technical field of a socket, and in particular, to a socket with insect-extermination function.

### DESCRIPTION OF THE PRIOR ART

Some flying insects, such as mosquitoes, flies, bed bugs, etc., often appear in places of human activities. These flying insects not only affect the living environment, but can also easily cause infectious diseases after biting humans, especially mosquitoes, the most common flying insects. Therefore, it is very necessary to exterminate the insects.

A socket refers to an outlet into which one or more electrical wirings can be plugged. Various wirings can be plugged into the socket for connection with other circuits. Through the connection and disconnection between wirings and copper parts, connection and disconnection of the corresponding circuits can be achieved. However, the existing sockets have simple structures and functions, and there has been no product that combines insect extermination and socket on the market yet.

### SUMMARY

The present disclosure aims to provide a socket with insect-extermination function. The socket has an insect-extermination function, extending the functions of the socket. Due to the ubiquity of the socket, it can effectively exterminate indoor flying insects, keeping people safe from insects.

The technical solution of the present disclosure is to provide a socket with insect-extermination function, including a socket body and a sticky trapping plate. The sticky trapping plate is detachably connected to the socket body, and at least one side of the sticky trapping plate is pasted with a trapping sticker.

Based on the above configuration, the socket with insect-extermination function of the present disclosure has the following advantages compared with the existing sockets.

The socket body of the socket with insect-extermination function of the present disclosure is detachably connected with a sticky trapping plate, and at least one side of the sticky trapping plate is pasted with a trapping sticker. Flying insects near the socket will be trapped by the trapping sticker and then will be killed after being stuck for a long time. The socket of the present disclosure can not only be used as a common socket, but also can effectively kill indoor flying insects.

As a development, a slot is defined in an outer wall of the socket body, and one end of the sticky trapping plate is inserted into the slot. Based on this, the sticky trapping plate has a simple structure, and it is easy to disassemble and assemble the sticky trapping plate during use.

As a development, the socket body is provided with a connection base, the slot is defined in the connection base, and the connection base protrudes outward from the socket body. Based on this, the sticky trapping plate can be assembled easily.

As a development, the connection base is provided at an upper end of the socket body, the socket body is provided with at least one jack group, the connection base is located on an upper side of the jack group, and the slot is defined on an upper end surface of the connection base. Based on this, the sticky trapping plate is assembled on the upper end of the socket body, with a more stable installation, and will not fall off due to gravity.

As a development, a snapping block is provided in the slot, a snapping slot is provided at the end of the sticky trapping plate, and the snapping block is embedded into the snapping slot. Based on this, the installation of the sticky trapping plate is more stable due to the engagement of the snapping block and the snapping slot.

As a development, the connection base or the socket body is provided with an insect trap lamp, and the insect trap lamp is located near the sticky trapping plate. Based on this, the insect trap lamp can trap nearby flying insects to the vicinity of the sticky trapping plate, improving the insect-extermination effect.

As a development, the socket body includes a socket panel, a box and a fixing frame, and the fixing frame fixedly connects the socket panel and the box. The connection base is provided on the socket panel, and the insect trap lamp is provided on the box. Based on this, the structure is simple and the design is reasonable.

As a development, the connection base is provided with a control switch configured to control the insect trap lamp to turn on or turn off. Based on this, the insect trap lamp can be controlled to turn on or off as needed by the control switch.

As a development, the box includes an electrical installation board and a box body, and the electrical installation board is fixedly connected to the box body. An accommodation chamber is defined between the connection base and the box, and the control box and the insect trap lamp are both installed in the accommodation chamber. A gap is defined between the control box and the insect trap lamp, a side wall of the connection base defines an insertion hole, and the insertion hole is aligned with the gap to form the slot. Based on this, the structure is simple and the design is reasonable.

As a development, the insect trap lamp includes a housing, a luminous body, a control board and a translucent plate. The luminous body is installed in the housing. An upper end of the housing defines an opening, and the translucent plate is installed at the opening. The control board is installed in the control box, and the luminous body and a control switch are both electrically connected to the control board through a wire. Light emitted by the luminous body is emitted through the translucent plate. Based on this, the insect trap lamp has a simple structure and a reasonable design.

As a development, the connection base is detachably connected to the socket body. Based on this, the connection base can be disassembled and assembled on the socket body as needed, making it more convenient for users to operate.

As a development, the connection base and the socket body are detachably connected with each other through a snapping structure or a magnet component or a plugging structure. Based on this, the disassembly and assembly of the connection base and the socket body are simple and convenient.

As a development, the jack group is a three-prong jack and/or a two-prong jack and/or a data cable jack.

As a development, the socket body is a wall socket; or a back of the socket body is provided with a plug; or the socket body is connected with a wire, an end of which is provided with a plug.

### BRIEF DESCRIPTION OF DRAWINGS

FIG. 1 is a perspective view of a socket according to Embodiment 1 of the present disclosure.
FIG. 2 is a partially exploded view of the socket according to Embodiment 1 of the present disclosure.
FIG. 3 is an exploded view of the socket body of the socket according to Embodiment 1 of the present disclosure.
FIG. 4 is an exploded view of the socket body of the socket according to Embodiment 1 of the present disclosure from another perspective.
FIG. 5 is an exploded view of the box of the socket according to Embodiment 1 of the present disclosure.
FIG. 6 is a perspective view of a socket (with a plug) according to Embodiment 2 of the present disclosure.
FIG. 7 is a perspective view of the socket (with a plug) according to Embodiment 2 of the present disclosure from another perspective.
FIG. 8 is a perspective view of a socket (with a wire and a plug) according to Embodiment 3 of the present disclosure.
FIG. 9 is a perspective view of a socket according to Embodiment 4 of the present disclosure.
FIG. 10 is a partially exploded view of the socket according to Embodiment 4 of the present disclosure.
FIG. 11 is a partially exploded view of the socket body of the socket according to Embodiment 4 of the present disclosure.
FIG. 12 is an exploded view of the connection base of the socket according to Embodiment 4 of the present disclosure.
FIG. 13 is an exploded view of the connection base of the socket according to Embodiment 4 of the present disclosure from another perspective.
FIG. 14 is a perspective view of a socket (with a plug) according to Embodiment 5 of the present disclosure.
FIG. 15 is a perspective view of a socket (with a wire and a plug) according to Embodiment 6 of the present disclosure.

List of reference signs: 1, socket body, 101, socket panel, 102, fixing frame, 103, jack group, 104, electrical installation board, 105, box body, 106, gap, 2, sticky trapping plate, 3, connection base, 301, slot, 302, insertion hole, 4, insect trap lamp, 401, housing, 402, luminous body, 404, translucent plate, 5, control switch, 6, plug, 7, wire.

### DESCRIPTION OF EMBODIMENTS

For a better understanding of the present disclosure, various aspects of the present disclosure will be described in more detail with reference to the accompanying drawings. It should be understood that these detailed descriptions are merely descriptions of exemplary embodiments of the present disclosure and are not intended to limit the scope of the present disclosure in any way. Throughout this specification, the same reference numbers refer to the same elements.

For convenience of illustration, the thickness, size and shape of objects in the drawings are slightly larger than those of the material objects. The drawings are examples only and are not strictly to scale.

It will be further understood that the terms "comprises" and/or "comprising", or "includes" and/or "including", or "has" and/or "having", when used in this specification, specify the presence of stated features, regions, integers, steps, operations, elements, and/or components, but do not preclude the presence or addition of one or more other features, regions, integers, steps, operations, elements, components, and/or groups thereof.

### Embodiment 1

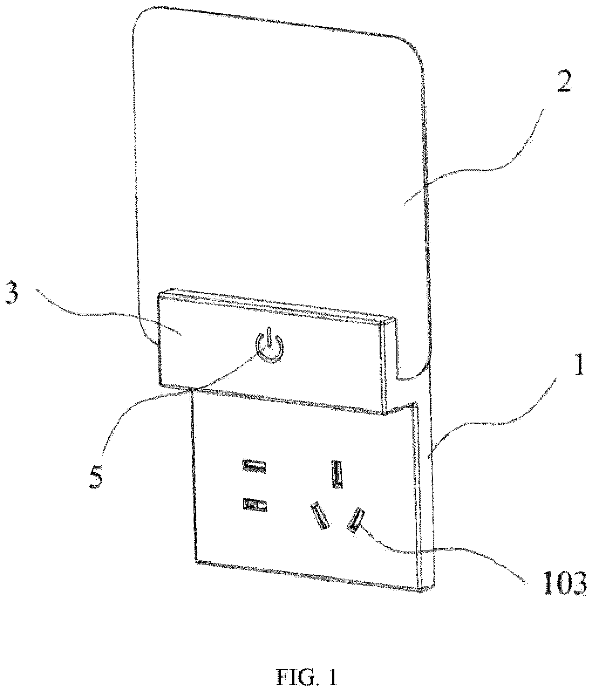

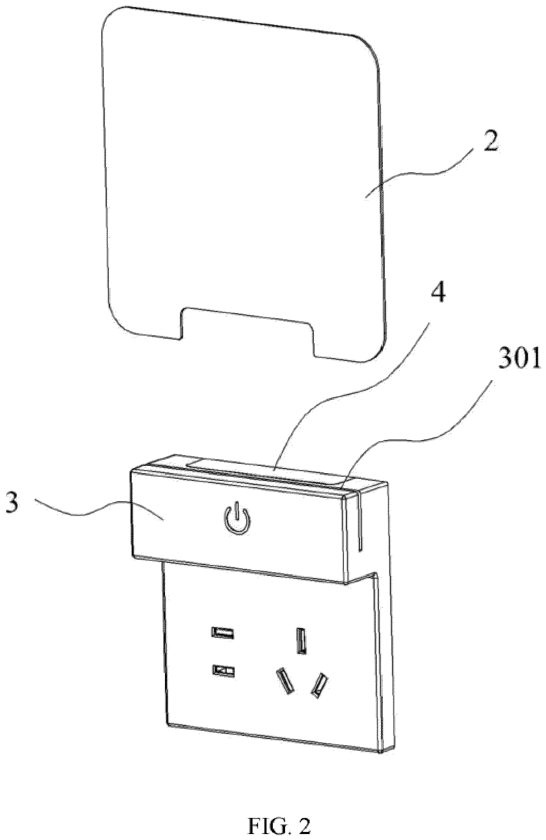

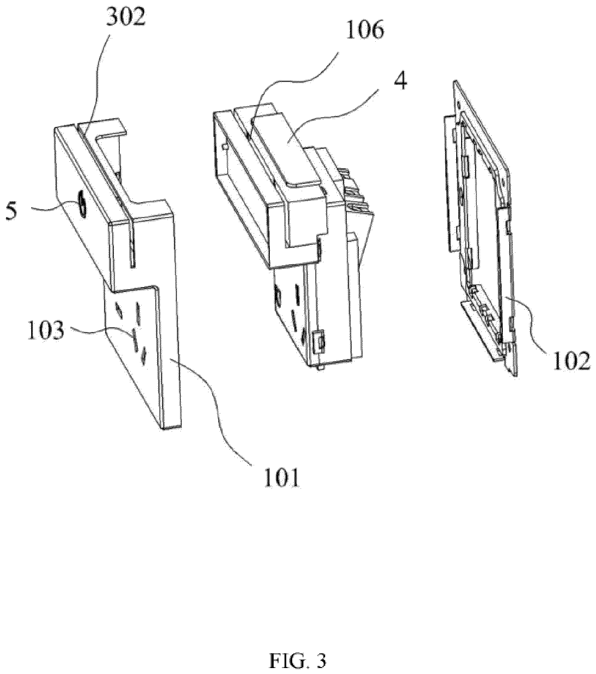

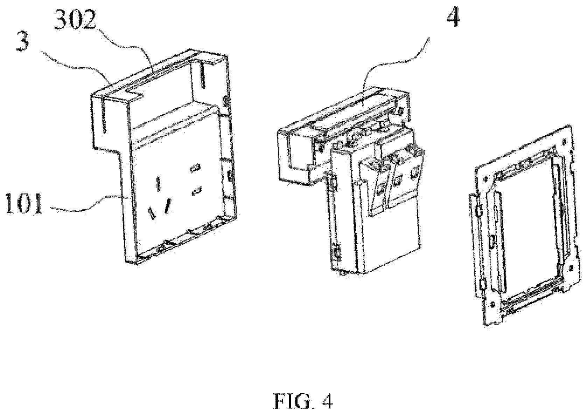

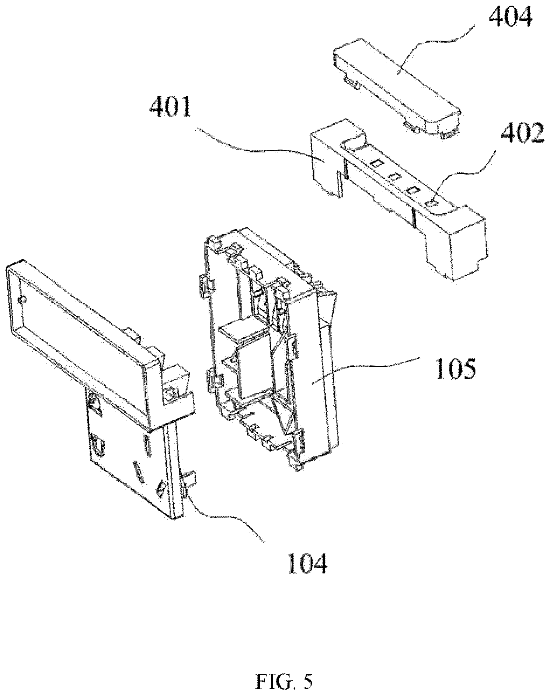

As shown in FIGS. 1 to 5, this embodiment discloses a socket with insect-extermination function, which includes a socket body 1 and a sticky trapping plate 2.

The socket body 1 includes a socket panel 101, a box and a fixing frame 102. The fixing frame 102 fixedly connects the socket panel 101 and the box. That is, the box is installed inside the box cover. The fixing frame 102 is pressed outside the box. The sides of the fixing frame 102 are snapped with the sides of the box cover.

The upper end of the socket panel 101 is provided with a connection base 3. The connection base 3 and the socket panel 101 are formed in one piece. The inner cavity of the connection base 3 is communicated with the inner cavity of the socket panel 101. The socket panel 101 is provided with at least one jack group 103, and the connection base 3 is located on the upper side of the jack group 103. The upper end surface of the connection base 3 defines a slot 301, and the lower end of the sticky trapping plate 2 is inserted into the slot 301. At least one side of the sticky trapping plate 2 is pasted with a trapping sticker. In use, both sides of the sticky trapping plate 2 can be respectively pasted with trapping stickers, thereby improving the trapping effect. The slot 301 is provided with a snapping block, one end of the sticky trapping plate 2 is provided with a snapping slot, and the snapping block is embedded in the snapping slot.

The connection base 3 or the socket body 1 is provided with an insect trap lamp, and the insect trap lamp is located near the sticky trapping plate 2. The box includes an electrical installation board 104 and a box body 105. The electrical installation board 104 is fixedly connected to the box body 105. An accommodation chamber is defined between the connection base 3 and the box. The control box and the insect trap lamp are installed in the accommodation chamber. A gap 106 is formed between the control box and the insect trap lamp. An insertion hole 302 is defined in the side wall of the connection base 3, and the insertion hole 302 is aligned with the gap 106 and they together form the slot 301.

The connection base 3 is provided with a control switch 5, and the control switch 5 is configured to control the turning on and off of the insect trap lamp. The insect trap lamp 4 includes a housing 401, luminous bodies 402, a control board (not shown) and a translucent plate 404. The luminous bodies 402 are installed in the housing 401. The upper end of the housing 401 has an opening, and the translucent plate 404 is installed at the opening. The control board (not shown) is installed in the control box, and the luminous bodies 402 and the control switch 5 are both electrically connected to the control board (not shown) through a wire 7. The light emitted by the luminous bodies 402 is emitted through the translucent plate 404. The box is further provided with a power component, and the power component supplies power to the insect trap lamp 4 and the control board (not shown).

The socket with an insect exterminator disclosed in this embodiment is a wall socket, and the fixing frame and the box are installed in the wall. The jack group is a three-prong jack and/or a two-prong jack and/or a data cable jack.

### Embodiment 2

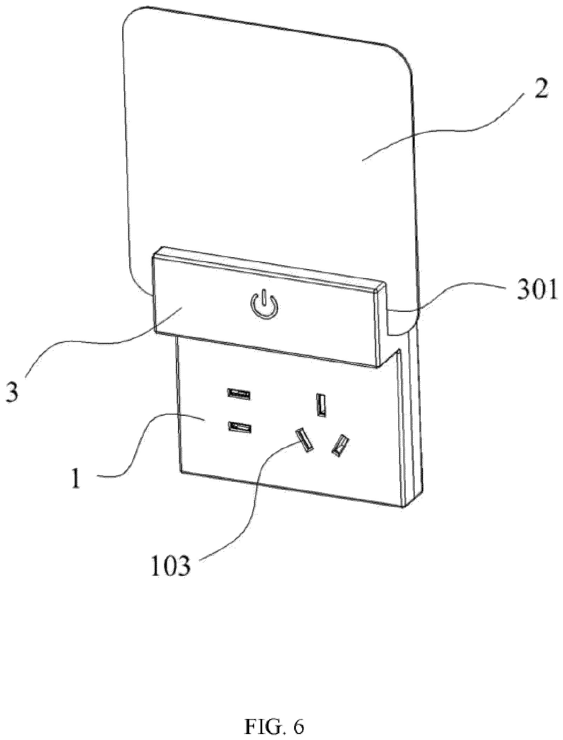

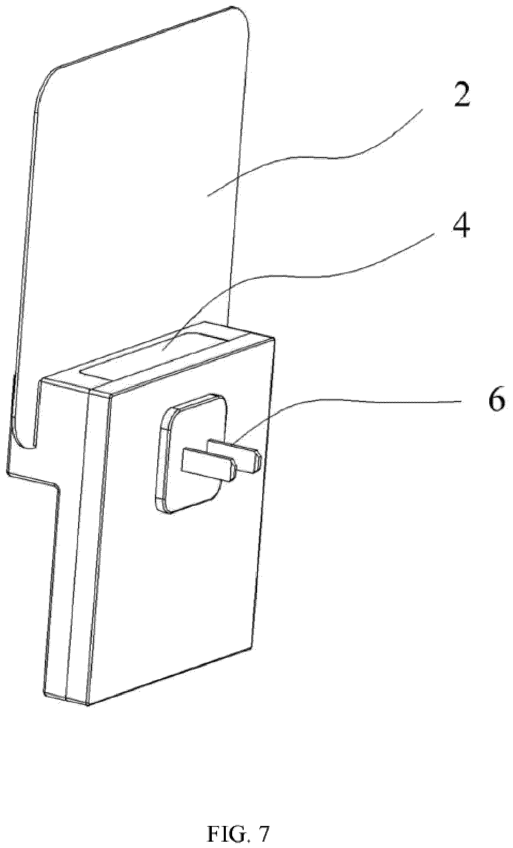

As shown in FIGS. 6 to 7, this embodiment discloses a socket with an insect-extermination component. Compared with Embodiment 1, the socket according to this embodiment has the following differences: the back of the socket body is provided with a plug 6. The plug 6 is arranged on the back of the box, and the socket circuit is connected to the plug 6. In use of this socket, the plug 6 is plugged into the jack of another socket to draw power. The jack group 103 is a three-prong jack and/or a two-prong jack and/or a data cable jack.

### Embodiment 3

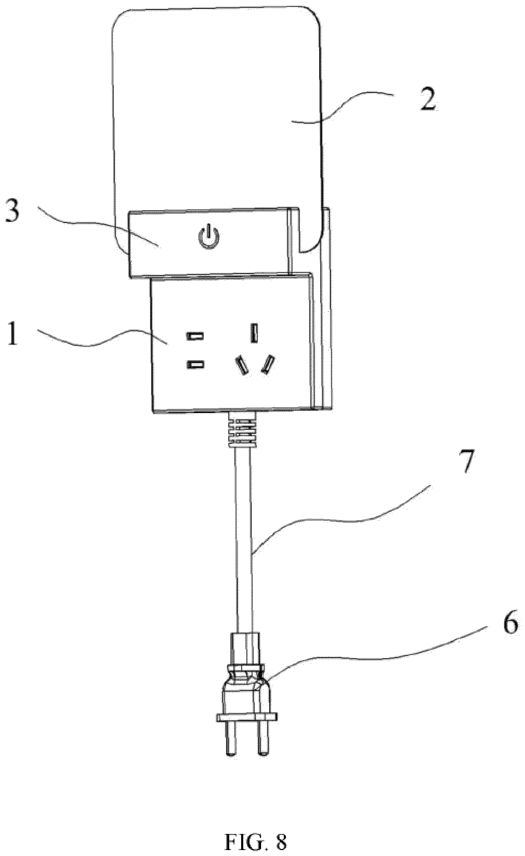

As shown in FIG. 8, this embodiment discloses a socket with an insect-extermination component. Compared with Embodiment 1, the socket according to this embodiment has the following differences: the socket body is connected with a wire 7, and the wire 7 is electrically connected to the socket circuit in the socket body. The end of the wire 7 is connected to a plug 6. In use of this socket, the plug 6 is plugged into the jack of another socket to draw power. The jack group 103 is a three-prong jack and/or a two-prong jack and/or a data cable jack.

### Embodiment 4

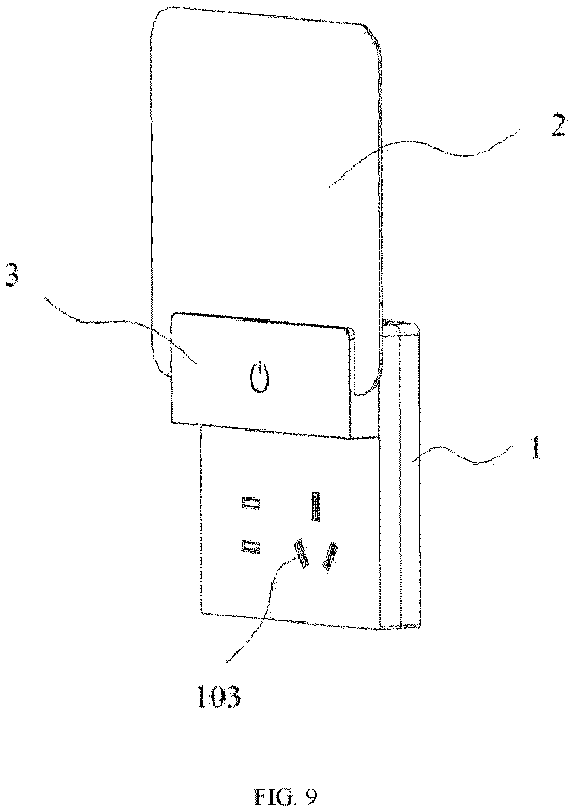

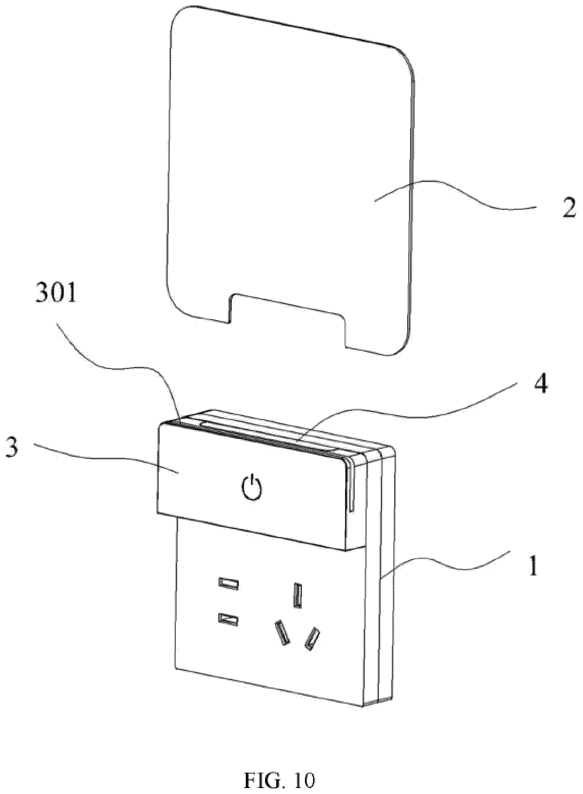

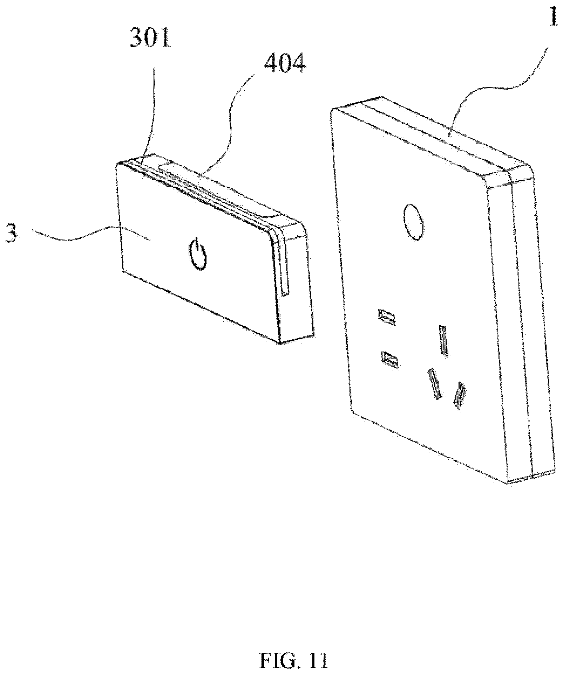

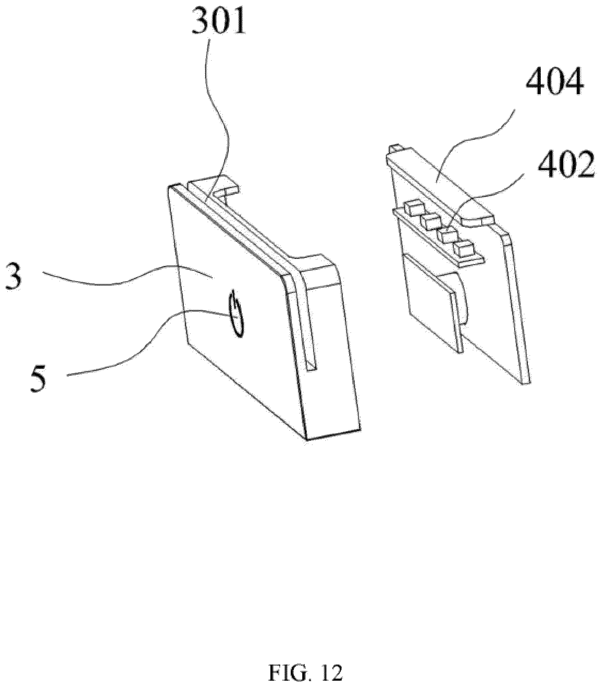

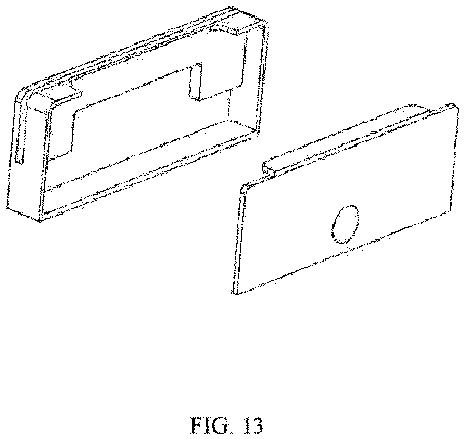

As shown in FIGS. 9 to 13, this embodiment discloses a socket with insect-extermination function. Compared with Embodiment 1, the socket according to this embodiment has the following differences.

The connection base 3 is detachably connected to the socket body 1. The connection base 3 and the socket body 1 are formed in separate pieces. The connection base 3 and the socket body 1 are detachably connected with each other through a snapping structure or a magnet component.

The sticky trapping plate 2 is detachably connected to the connection base 3. The upper end surface of the connection base 3 is provided with a slot 301. One end of the sticky trapping plate 2 is inserted into the slot 301.

The connection base 3 is provided with a control switch 5 which is located on one side of the slot 301. The connection base 3 is provided with an insect trap lamp, and the insect trap lamp is located on the other side of the slot 301. The insect trap lamp includes luminous bodies 402, a control board (not shown) and a translucent plate 404. The luminous bodies 402 are installed in the connection base 3. The upper side of the connection base 3 has an opening, and the translucent plate 404 is installed at the opening. The control board (not shown) is installed in the connection base 3, and the luminous bodies 402 and the control switch 5 are both electrically connected to the control board (not shown) through a wire 7. The light emitted by the luminous bodies 402 is emitted through the translucent plate 404. The mounting base is further provided with a power component, and the power component supplies power to the insect trap lamp 4 and the control board (not shown).

The socket with an insect exterminator disclosed in this embodiment is a wall socket, and one side of the socket body is installed in the wall. The jack group 103 is a three-prong jack and/or a two-prong jack and/or a data cable jack.

### Embodiment 5

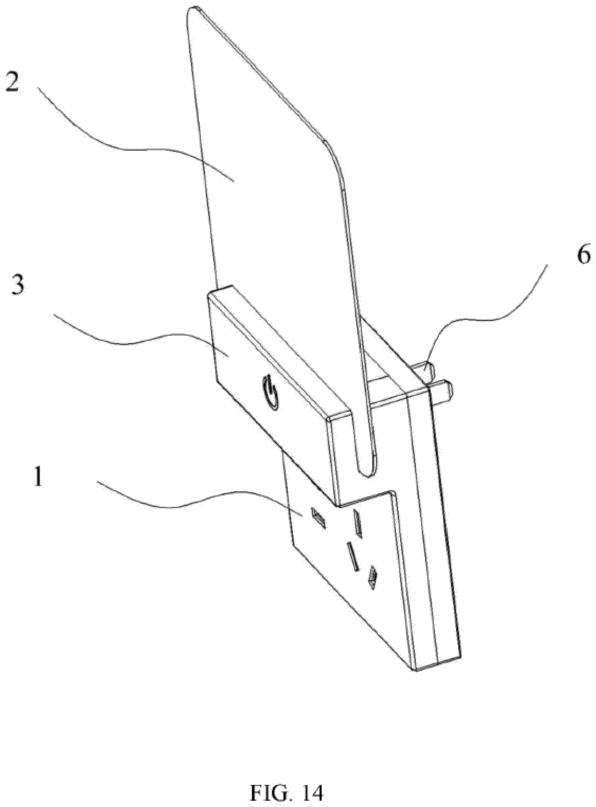

As shown in FIG. 14, this embodiment discloses a socket with an insect-extermination component. Compared with Embodiment 1, the socket according to this embodiment has the following differences: the back of the socket body has a plug 6, and the socket circuit is connected to the plug 6. In use of this socket, the plug 6 is plugged into the jack of another socket to draw power. The jack group 103 is a three-prong jack and/or a two-prong jack and/or a data cable jack.

### Embodiment 6

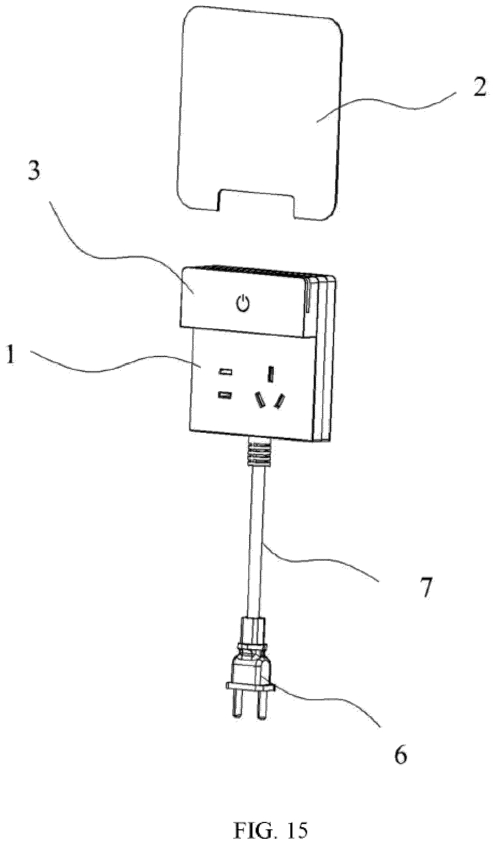

As shown in FIG. 15, this embodiment discloses a socket with an insect-extermination component. Compared with Embodiment 1, the socket according to this embodiment has the following differences: the socket body 1 is connected with a wire 7. The wire 7 is electrically connected to the socket circuit in the socket body 1. The end of the wire 7 is connected with a plug 6. In use of this socket, the plug 6 is plugged into the jack of another socket to draw power. The jack group 103 is a three-prong jack and/or a two-prong jack and/or a data cable jack.

The present disclosure is not limited to the above-mentioned optimal embodiments. Any skilled person in the art can derive various other forms of products under the motivation of the present disclosure. Regardless of any changes in shape or structure, any products having the same or similar technical solution as the present disclosure fall within the protection scope of the present disclosure.

## Claims

1. A socket with insect-extermination function, comprising a socket body and a sticky trapping plate, the sticky trapping plate is detachably connected to the socket body, and at least one side of the sticky trapping plate is pasted with a trapping sticker.

2. The socket with insect-extermination function of claim 1, wherein a slot is defined in an outer wall of the socket body, and one end of the sticky trapping plate is inserted into the slot.

3. The socket with insect-extermination function of claim 2, wherein the socket body is provided with a connection base, the slot is defined in the connection base, and the connection base protrudes outward from the socket body.

4. The socket with insect-extermination function of claim 3, wherein the connection base is provided at an upper end of the socket body, the socket body is provided with at least one jack group, the connection base is located on an upper side of the jack group, and the slot is defined on an upper end surface of the connection base.

5. The socket with insect-extermination function of claim 2, wherein a snapping block is provided in the slot, a snapping slot is provided at the end of the sticky trapping plate, and the snapping block is embedded into the snapping slot.

6. The socket with insect-extermination function of claim 2, wherein the connection base or the socket body is provided with an insect trap lamp, and the insect trap lamp is located near the sticky trapping plate.

7. The socket with insect-extermination function of claim 5, wherein the socket body comprises a socket panel, a box and a fixing frame, and the fixing frame fixedly connects the socket panel and the box; and wherein the connection base is provided on the socket panel, and the insect trap lamp is provided on the box.

8. The socket with insect-extermination function of claim 7, wherein the connection base is provided with a control switch configured to control the insect trap lamp to turn on or turn off.

9. The socket with insect-extermination function of claim 7, wherein the box comprises an electrical installation board and a box body, and the electrical installation board is fixedly connected to the box body; and an accommodation chamber is defined between the connection base and the box, the control box and the insect trap lamp are both installed in the accommodation chamber, a gap is defined between the control box and the insect trap lamp, a side wall of the connection base defines an insertion hole, and the insertion hole is aligned with the gap to form the slot.

10. The socket with insect-extermination function of claim 9, wherein the insect trap lamp comprises a housing, a luminous body, a control board and a translucent plate, the luminous body is installed in the housing, an upper end of the housing defines an opening, and the translucent plate is installed at the opening; the control board is installed in the control box, and the luminous body and a control switch are both electrically connected to the control board through a wire; and light emitted by the luminous body is emitted through the translucent plate.

11. The socket with insect-extermination function of claim 3, wherein the connection base is detachably connected to the socket body.

12. The socket with insect-extermination function of claim 10, wherein the connection base and the socket body are detachably connected with each other through a snapping structure or a magnet component or a plugging structure.

13. The socket with insect-extermination function of claim 1, wherein the jack group is a three-prong jack and/or a two-prong jack and/or a data cable jack.

14. The socket with insect-extermination function of claim 1, wherein the socket body is a wall socket; or a back of the socket body is provided with a plug; or the socket body is connected with a wire, an end of which is provided with a plug.
